**Europäisches Patentamt**

**European Patent Office**

**Office européen des brevets**

(19)

(11) Publication number : **0 380 299 B1**

# (12) EUROPEAN PATENT SPECIFICATION

(45) Date of publication of patent specification :
**26.08.92 Bulletin 92/35**

(51) Int. Cl.[5] : **C02F 5/02, C23F 15/00**

(21) Application number : **90300698.9**

(22) Date of filing : **23.01.90**

(54) **Method of improving langelier index of city water and an apparatus therefor.**

(30) Priority : **24.01.89 JP 14662/89**

(43) Date of publication of application :
**01.08.90 Bulletin 90/31**

(45) Publication of the grant of the patent :
**26.08.92 Bulletin 92/35**

(84) Designated Contracting States :
**DE GB IT**

(56) References cited :
**FR-A- 2 376 079**
**FR-A- 2 616 451**

(73) Proprietor : **KUREHA KAGAKU KOGYO
KABUSHIKI KAISHA
1-9-11, Nihonbashi, Horidome-cho
Chuo-ku Tokyo 103 (JP)**
Proprietor : **KUREHA ENGINEERING CO., LTD.
135 Ochiai, Nishiki-machi
Iwaki-shi Fukushima-ken (JP)**

(72) Inventor : **Funahashi, Isao
32-25 Kitanosaku, Obama-Machi
Iwaki-shi, Fukushima-ken (JP)**
Inventor : **Yamamoto, Kiwamu
2-15-3 Shonan-Takatori
Yokosuka-shi, Kanagawa-ken (JP)**
Inventor : **Kuboki, Shinichi
5 Tabe Aza Watabe, Watanabe-machi
Iwaki-shi, Fukushima-ken (JP)**
Inventor : **Hiruta, Masahiro
700-6 Ishohara, Isohara-machi
Kita-Ibaraki-shi, Ibaraki-ken (JP)**
Inventor : **Abe, Hideo
1-12-12 Higashi-Tabata, Kita-ku
Tokyo (JP)**
Inventor : **Ono, Moritoshi
29 Kawahara, Kawabe-machi
Iwaki-shi, Fukushima-ken (JP)**

(74) Representative : **Woods, Geoffrey Corlett et al
J.A. KEMP & CO. 14 South Square Gray's Inn
London WC1R 5EU (GB)**

EP 0 380 299 B1

Jouve, 18, rue Saint-Denis, 75001 PARIS

## Description

## BACKGROUND OF THE INVENTION:

The present invention relates to a method of improving a Langelier index, which is an index of corrosiveness of water, of city water and an apparatus therefor by increasing a concentration of calcium hydrogen carbonate in the water by an addition of aqueous solution of calcium hydroxide and gaseous carbon dioxide to make the water less corrosive.

The Langelier index referred to herein is an index used for judging the corrosiveness of water and was proposed by Mr. Langelier in U.S.A. and represented by the following equation (a):

$$LI = pH - pHs$$
$$= pH - \{ 8.313 - \log[Ca^{++}] - \log[A] + S \} ----- (a)$$

wherein:

LI: Langelier index,

pH: measured pH value of water to be tested,

pHs: theoretical pH value of water to be tested when $CaCO_3$ in the water maintains equilibrium according to the following equation:

$$Ca^{++} + HCO_3 \rightleftarrows CaCO_3 + H^+,$$

$\log[Ca^{++}]$: logarithm of calcium ion concentration,

$\log[A]$: logarithm of total alkalinity, and

S: correction value.

In addition to the above calculation method, Langelier index can be calculated simpler using pHs values obtained from the pHs calculation table of E. Nordell [Water Treatment for Industrial and Other Uses, page 223 (1951)].

Referring more concretely, when Langelier index (hereinafter referred to as "LI") is positive, it indicates a state in which calcium carbonate is deposited from water, when LI is negative, it indicates a state in which calcium carbonate is dissolved in water and when LI is zero, it indicates an equilibrium state in which the deposition and the dissolution occur simultaneously, namely, neither deposition nor dissolution of the carbonate occurs. As is explained above, LI is used as an index to judge a corrosiveness of water and if its value is controlled to be larger than -1, it is generally understood as effective to prevent corrosion of iron material by the water.

Heretofore, sodium hydroxide addition, anti-rust agent addition, magnetic application, slaked lime addition, etc. have usually been applied to prevent generation of red water caused by iron rust in city water, namely, corrosion of iron material.

In a sodium hydroxide addition method, since sodium hydroxide is mainly composed of sodium, it is bad for health if the large amount of the treated water is taken in a body. Accordingly, the sodium concentration in city water is regulated to less than 20 ppm in the United States by EPA (Environmental Protection Agency). Further, an addition of sodium hydroxide into water increases its pH value and only slightly its alkalinity and as is clear from the equation (a), its LI can not be improved substantially. Therefore, within a range of EPA regulation or within a pH range causing no undesirable effect on living body, no substantial effect can be expected fro preventing generation of red water caused by iron rust (hereinafter referred to as "red rust water").

Anti-rust agent addition includes a phosphate system and a silicate system. An effect of the addition of a silicate system is insufficient. Although a satisfactory effect of the addition of a phosphate system can be obtained, there exist several problems, for example, an odoring of water due to growing of algae in over-head tank because of an eutrofication caused by phosphate and a reduction of residual chlorine concentration due to a reaction between algae and chlorine in water.

As to a magnetic method, no practical improvement can be expected for preventing the occurrence of red rust water since the decay time of magnetic field in the water is estimated to be only about 24 hours.

Slaked lime or calcium hydroxide addition can increase calcium ion concentration, total alkalinity and pH value of water and can provide a remarkable improvement of LI as can be seen form the equation (a). In addition, if LI is increased to a positive range, thin layer of calcium carbonate is formed on an inner surface of tap water pipe and so on, to further improve the anti-corrosive effect.

Further, since intake of calcium into living body is considered desirable for health, the method has been employed more and more in recent years for water cleaning plants of the waterworks or water treating apparatus in usual buildings.

EP 0 380 299 B1

In this method, if a concentration of free carbonic acid in a city water to be treated (hereinafter referred to as "original water") is sufficiently high, calcium hydrogen carbonate of high solubility in water is formed by the neutralizing reaction represented by the following reaction equation:

$$Ca(OH)_2 + 2H_2CO_3 \rightarrow Ca(HCO_3)_2 + 2H_2O$$

and in this case, LI can be improved with no remarkable pH raise. However, even in this method, since most of the original water, for example, surface water, has a low concentration of free carbonic acid, for instance, not more than about 20 ppm, the neutralizing reaction will be completed with an addition of only a small amount of slaked lime. Then, to improve LI, it is necessary to add a large amount of slaked lime and it is inevitable to raise a pH value over the standard value of 8.6 of city water in Japan and accordingly no improvement of LI can be done without violating the regulation for tap water in Japan.

No sufficient result can be attained so far since the countermeasure against a generation of red rust water has been based on the idea of removing free carbonic acid contained in the original water. The present inventors, based on the quite contrary idea, namely, by blowing gaseous carbon dioxide into an original water to make the concentration of free carbonic acid in the water high and adding slaked lime thereinto to convert free carbonic acid into calcium hydrogen carbonate, have found a clue to develope a continuous method for improving city water so as to have a desired LI and also an apparatus for the method. However, since an equipment for directly detecting LI is not exist yet, there is a problem how to actually practice the improvement.. As a result of their extensive studies, the present inventors have completed the present invention based on the findings that (1) it is possible to improve LI of a city water to an optimum value determined as a final goal (hereinafter referred to as "desired LI") while keeping its pH value within a regulated range by adding an aqueous solution of slaked lime to an original water having high concentration of free carbonic acid, (2) a free carbonic acid to be present in an original water can be determined based on LI calculated from the analytical values of an original water and a desired LI and (3) an amount of free carbonic acid dissolved in an original water prior to an addition of slaked lime and LI of the water treated with slaked lime can be measured indirectly from pH value of each water.

BRIEF EXPLANATION OF THE DRAWINGS:

Figures 1 and 2 are graphs illustrating relationship between the addition amount of slaked lime and the LI and pH value.

Figures 3 and 4 are drawings, respectively illustrating the process and the apparatus of the present invention.

Figure 5 shows one embodiment of a preferred form of a vessel for dissolving gaseous carbon dioxide.

In the drawings:

1: slaked lime dissolving vessel,

5. gaseous carbon dioxide dissolving vessel,

8. gaseous carbon dioxide flow rate controller,

13. substantially saturated slaked lime solution addition vessel,

14. pH detector,

15. flow rate detector,

19. flow rate controlling pump,

FQC. flow rate controller

PHC. pH controller,

FI. flow rate indicator.

SUMMARY OF THE INVENTION:

An object of the present invention is to provide a method of and apparatus for improving water quality by maintaining a concentration of free carbonic acid in a city water at a relatively high level and adding a slaked lime solution thereto.

Another object of the present invention is to provide a continuous method of and its apparatus for improving a city water so as to have a desired LI by determining the amount of free carbonic acid to be present in an original water based on LI of the water, a desired LI and pH value regulated as a city water and adding a substantially saturated aqueous solution of slaked lime.

Another object of the present invention is to provide a continuous method and its apparatus for adjusting an amount of adding a substantially saturated aqueous solution of slaked lime based on pH values of the treating water, in the process to get a city water having a desired LI by adding the solution to a water containing relatively high level of free carbonic acid concentration.

3

A still further object of the present invention is to provide a method of and an apparatus for obtaining a city water causing less corrosion to material of equipments and causing no red rust water.

A still another object of the present invention is to provide a city water having a desired LI and also a pH value within a range of regulation and treated by the method or the apparatus of the present invention.

DETAILED DESCRIPTION OF THE PRESENT INVENTION:

The present invention concerns a method of adding slaked lime to a city water to improve the water and it provides a method of and an apparatus for providing a city water having a desired LI and a pH value within a range of the regulation by dissolving a certain amount of gaseous carbon dioxide, determined experimentally from LI of an original water, a desired LI and a pH value within a regulated range, into the water to prepare a water containing free carbonic acid and by adding thereto a substantially saturated aqueous solution of slaked lime to convert free carbonic acid to calcium hydrogen carbonate. Main part of this method comprises a step interlocking a detected signal of pH of the water containing free carbonic acid or of the water treated with slaked lime with a flow rate controller of the substantially saturated aqueous solution of slaked lime. The present invention also concerns an improved city water having a desired LI and a pH value within a regulation range produced by the method mentioned above.

The city water treated by the method or apparatus of the present invention is non--corrosive, capable of preventing generation of red rust water, containing enriched calcium which is important for human health and causing no scales in water pipes and storage tanks and conclusively is very excellent in its quality.

The city water referred to in the present invention means water supplied or to be supplied to each places of use through pipe line after treated in a place having water accumulating apparatus or cleaning apparatus and it includes not only a water for drinking but also for starting material in industry, washing water for apparatus or articles, cooling or heating water to be used for temperature control,water for generating steam, etc.

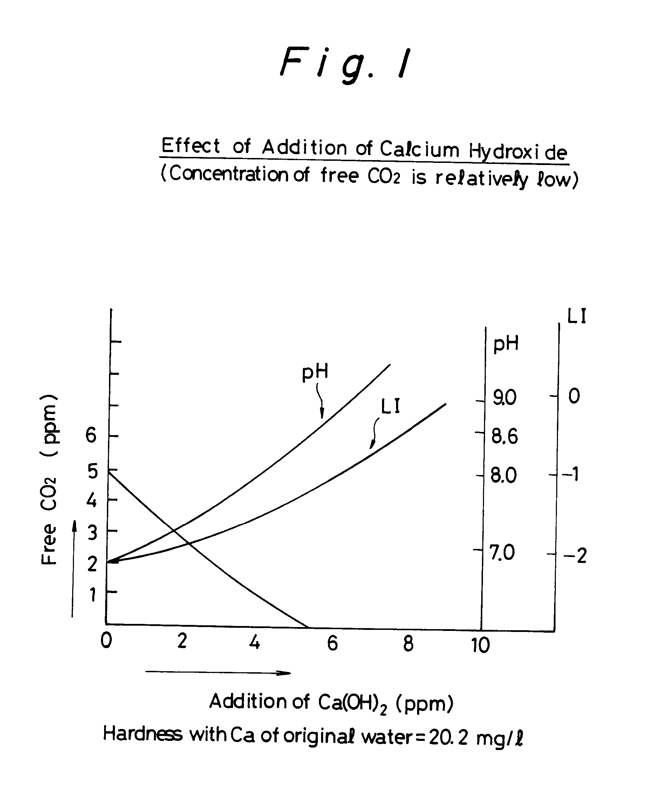

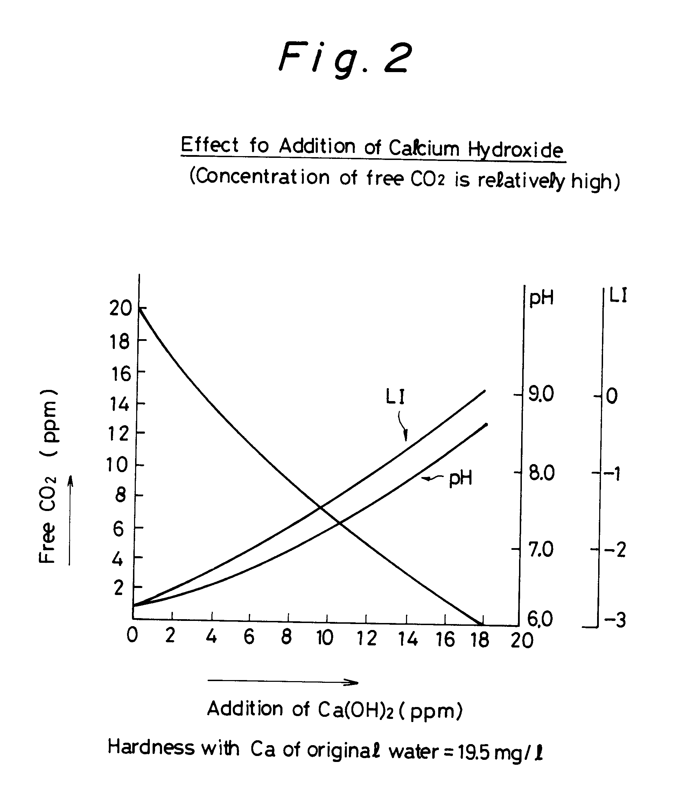

Hereafter, we will explain more in detail a relationship between an addition amount of slaked lime, LI and a pH value which are the bases of the present invention and developed as the result of their extensive studies of the present inventors. Figure 1 shows a case where the concentration of free carbonic acid in an original water is 5 ppm and as can be seen from the figure, when an amount of slaked lime of 5.6 ppm is added, free carbonic acid is already neutralized at a pH value of 8.6 and a LI of -1.2. If slaked lime is further added to increase LI to the desired level, pH value of the treated water is further increased to exceed the upper limit of 8.6 which is determined in the standards for a city water in Japan. On the other hand, Figure 2 shows an example of original water in which the amount of free carbonic acid is 20 ppm and when an amount of slaked lime of 18 ppm is added LI becomes 0 and pH remains at 8.6. From these figures and the explanation, it can be anticipated that if the concentration of free carbonic acid in an original water is, for example, lower than 20 ppm, it is probable in a high percentage that unless a pH value exceeds the upper limit of the water quality standards, LI can not be in the desired range. However, the lower limit of 20 ppm is the value subject to change depending upon qualities of the water.

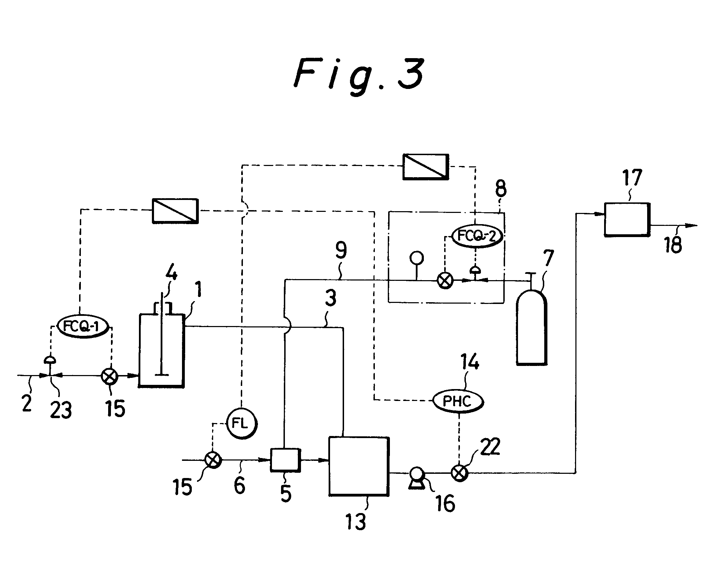

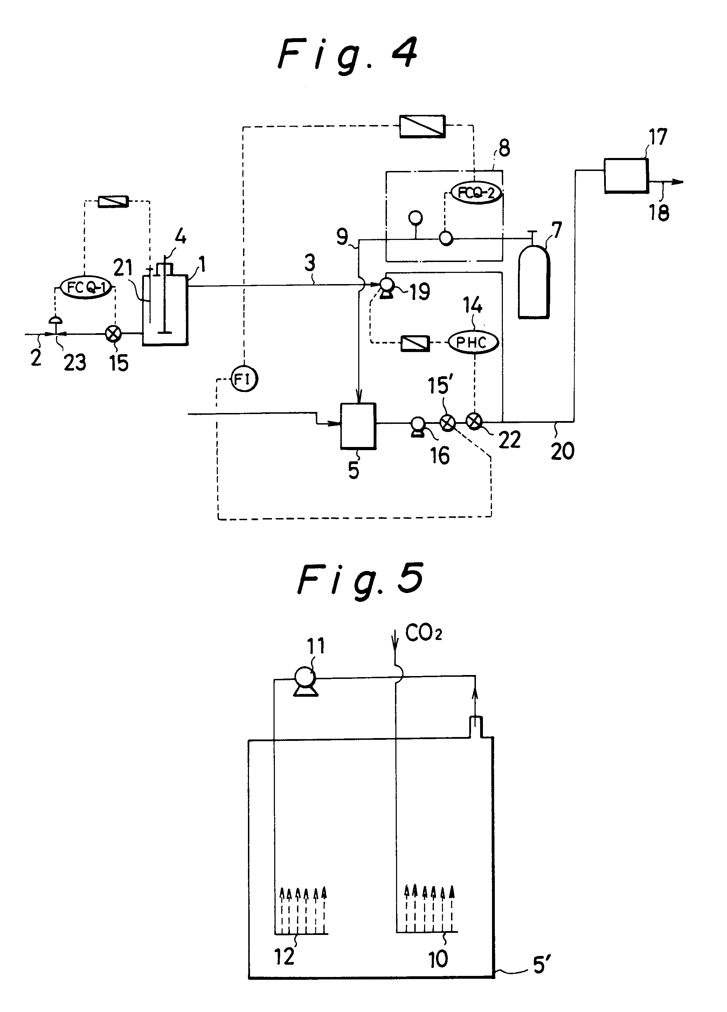

The present invention also includes an apparatus for continuous operation incorporated with the method according to the present invention capable of continuously improving LI of a city water. Namely, the apparatus comprises a slaked lime dissolving vessel to prepare a substantially saturated aqueous solution of slaked lime (an example of method for dissolving slaked lime in a water to prepare the substantially saturated aqueous solution and its device are described in detail in US Patent Nos. 4,366,142 and 4,389,376); a gaseous carbon dioxide dissolving vessel to obtain a water containing free carbonic acid at a concentration determined by LI of an original water and a desired LI; a slaked lime addition vessel (refer to Figure 3) or an addition portion (refer to Figure 4) to add the substantially saturated aqueous solution to the water containing free carbonic acid sent from the dissolving vessel; and a flow rate controller (for example, flow rate control valve, flow rate controlling pump) for the substantially saturated aqueous solution interlocked with a pH detector for the water containing free carbonic acid treated with slaked lime. By these procedures, free carbonic acid in the water is converted into calcium hydrogen carbonate and the addition amount of the substantially saturated aqueous solution is automatically controlled to obtain a water having a pH value determined based on the desired LI.

The present invention will now be described more concretely.

The feature of the present invention lies in improving city water having a negative LI by adjusting the LI to a desired value applying slaked lime and gaseous carbon dioxide. The desired value of LI is within a range of -1 to +1, preferably, of -0.5 to -0.5. If LI of a city water is less than -1, corrosiveness is relatively large failing to exhibit sufficient anti-rust effect. On the other hand, if it exceeds +1, a considerable amount of calcium carbonate is deposited to cause white turbidity in the water or generate scales in the apparatus.

To practice the present invention, it is necessary to previously calculate LI of an original water, as well as previously set a desired LI of the water treated by slaked lime (hereinafter referred to as "treated water"). LI of an original water is calculated based on the measured value of pH, calcium ion concentration and total alkalinity of the water. The desired LI is experimentally determined within a range of -1 to +1. Further, the amount of free carbonic acid to be contained in the original water is experimentally determined so as to improve LI of the treated water to a desired value and at the same time to keep the pH value within a range of the water quality standard for city water. Then, gaseous carbonic dioxide is added to the original water to prepare water containing free carbonic acid at a predetermined concentration.. In this case, it is preferable to use a method of continuously preparing water containing free carbonic acid at a predetermined concentration by controlling the flow rate of original water and the flow rate of gaseous carbon dioxide in an interlocking manner. Improvement to reach the desired LI can be accomplished by controlling the addition amount of slaked lime according to pH value of the treating water.

One embodiment of the present invention will be described more specifically referring to Figure 3. In Figure 3, 1 denotes a slaked lime dissolving vessel and slaked lime is used as a substantially saturated aqueous solution. The substantially saturated aqueous solution of slaked lime means herein such an aqueous solution within a concentration range of 1,400 to 1,800 ppm, preferably, 1,550 to 1,650 ppm of slaked lime. The slaked lime dissolving vessel 1 preferably comprises a water feed pipe 2 at the lower portion, an overflow pipe 3 at the upper portion and a low speed stirrer 4. Slaked lime is previously charged in such an amount as required for continuous operation for several days to several tens days in the slaked lime dissolving vessel 1, dissolving water is supplied from the bottom via the water supply pipe 2 and a substantially saturated aqueous solution of slaked lime is prepared under low speed stirring.

On the other hand, an original water is supplied through a pipe 6 to a gaseous carbon dioxide dissolving vessel 5 and simultaneously, carbon dioxide is supplied from a bomb 7 through a pipe 9 to prepare a water containing free carbonic acid. Although there may be various method to maintain a concentration of free carbonic acid in a water to a predetermined level, a preferred method comprises detecting the flow rate of the original water at flow rate detecting end 15', converting it into an electric signal through FI and interlocking the signal with a gaseous carbon dioxide flow rate controller 8. Although a line mixer or a static mixer can be used for dissolving gaseous carbon dioxide, to utilize carbon dioxide more effectively it is preferable to use, for example, a gaseous carbon dioxide dissolving vessel 5', as shown in Figure 5, having air diffuser 10 attached to the end of pipe 9, an exhaust recycle blower 11 and an air diffuser 12 attached to the end of recycling pipe.

The thus prepared water containing free carbonic acid at a predetermined concentration is sent to a slaked lime addition vessel 13 and a substantially saturated aqueous solution of slaked lime is added. With this procedure, the water is improved to have a desired LI and less corrosive property and it is distributed by a water supply pump 16 via water storage tank 17 through supply pipe 18 to each of places to consume it.

To obtain a treated water having a desired LI, it is preferable to employ a method of continuously obtaining the water having a predetermined pH value, namely, a desired LI, in other words, of continuously controlling the addition amount of the substantially saturated aqueous solution by converting the pH value of the treated water into an electric signal through a pH detector 22 and converting a flow rate of water to dissolve slaked lime into an electric signal through a flow rate detector 15, and interlocking both electric signals by way of PHC (pH controller) 14 and FQC-1 (flow rate controller) thereby automatically adjusting an opening of the flow rate control valve 23.

Another embodiment of the present invention will be described referring to Figure 4. In Figure 4, the substantially saturated aqueous solution prepared in the vessel 1 is added to a flow of water containing free carbonic acid in a predetermined concentration adjusted by blowing gaseous carbon dioxide into the original water in the same way as shown in Figure 3. However, the addition amount of the substantially saturated aqueous solution is controlled in a different way.

In Figure 4, a pH value of the water containing free carbonic acid is detected with a pH detector 22 after leaving the gaseous carbon dioxide dissolving vessel 5 and is converted into a electric signal which is sent to PHC 14 and then transmitted to a flow rate controlling pump 19 installed on a pipe 3 connecting vessel 1 and pipe 20, so that the addition amount of the substantially saturated aqueous solution is controlled such that the treated water can maintain a predetermined pH value, namely, a desired LI. Although, it is preferable to provide an addition vessel 13 as shown in Figure 3, for the addition of the substantially saturated aqueous solution , in a case of improving LI of water in a relatively small-scale, for example, consumed in one building only, the addition vessel 13 may be saved and the aqueous solution can be put into at any position of water supply pipe 20 between pH detecting end 22 and a water storage tank 17.

In the apparatus shown in Figure 4, since the addition of the substantially saturated aqueous solution is performed by the forced supply of water by the flow rate controlling pump 19, if the aqueous solution is stored in an amount required for the continuous operation over a predetermined period of time in the dissolving vessel 1, operation may be conducted intermittently by providing a liquid level meter 21 to the vessel 1. It is more preferable to operate the apparatus maintaining a liquid level in the vessel 1 substantially constant by sending signals from the liquid level meter *21* and the flow rate detector <u>15</u> to FQC-1 thereby controlling an opening of the flow rate control valve <u>23</u>,

As has been described above, in the present invention to improve LI in an original water, which LI is different from water to water, to a desired LI, a certain amount of substantially saturated aqueous solution of slaked lime is added to an original water containing free carbonic acid prepared by dissolving experimentally predetermined amount of gaseous carbon dioxide to make a pH value of treated water become an also experimentally predetermined value. With the method of the present invention, an original water containing even a small amount of free carbonic acid, for example, a surface water can be improved to have a desired LI while keeping its pH value within a range of water quality standard and can exert a big effect to prevent generation of red rust water in a water cleaning plant or a small apparatus equipped, for example, in a building.

EXAMPLE:

The following experiment was performed to improve LI of original water, having calcium hardness of 20.2 ppm, total alkalinity of 56 ppm, free carbonic acid concentration of 5.2 ppm, pH value of 6.8 and LI of -1.9, to non-corrosive LI of +0.5.

Preliminarily, carbon dioxide gas was dissolved in the original water and prepared seven water samples having free carbonic acid concentration intervals of 5 ppm each other in a range of 10 to 40 ppm. Then, a substantially saturated aqueous solution of slaked lime (1,600 ppm in concentration) was added to each water sample and selected a treated water sample having pH value of in a range of 8.0 to 8.6 and LI is +0.5 and have found that a water sample having free carbonic acid concentration of 25 ppm and pH value of 6.1 before an addition of the substantially saturated solution was the one and after the addition its pH value was 8.4 and LI was +0.5.

Based on the result of the above experiment, LI improvement was performed as follows.

An apparatus shown in Figure 3, equipped with a 400 liter slaked lime dissolving vessel, a 30 liter carbon dioxide gas dissolving vessel and a 2,000 liter slaked lime addition vessel, was used. 20 kg of slaked lime was charged into the slaked lime dissolving vessel, the original water was supplied from the lower portion of the vessel and, under low speed stirring, a substantially saturated aqueous solution of slaked lime (pH = 12.7) was continuously prepared. On the other hand, the original water was supplied at a rate of 12 $m^3$/hr to the carbon dioxide gas dissolving vessel, and continuously prepared a free carbonic acid containing water of pH = 6.1 by blowing gaseous carbon dioxide continuously in it.

The free carbonic acid containing water was supplied at a rate of 12 $m^3$/hr to the slaked lime addition vessel and, at the same time, the substantially saturated aqueous solution of slaked lime was added to make pH value of the treated water at the exit of the vessel 8.4. LI of the treated water was measured and confirmed to be +0.5.

In this way, an original water of pH = 6.8 and LI = -1.9 could be improved continuously to obtain a treated water of pH = 8.4 and LI = +0.5.

**Claims**

1. A method of treating water to achieve a desired Langelier index in a water supply which comprises:
   (1) determining the amount of carbon dioxide required to increase the concentration of free carbonic acid in the water based on the existing and desired Langelier indices, and the acceptable pH range, of the water supply;
   (2) dissolving the said amount of carbon dioxide gas in the water to generate free carbonic acid in the water; and
   (3) adding a substantially saturated aqueous solution of slaked lime to the water supply such that the free carbonic acid is neutralised and the desired Langelier index is achieved.

2. A method according to claim 1, wherein the pH of the water containing free carbonic acid or of the water after addition of the solution of slaked lime is detected and a corresponding signal produced, said signal being supplied to a device controlling the flow rate of the substantially saturated aqueous solution of slaked lime into the water supply.

3. A method according to claim 1 or 2, wherein the flow rate of the water containing free carbonic acid produced in step (2) is detected and a corresponding signal produced, said signal being supplied to a carbon dioxide gas flow rate controller.

4. A method according to claim 1, 2 or 3, wherein the said desired Langelier index is from -1 to +1.

5. A method according to any one of the preceding claims wherein the starting content of free carbonic acid in the water supply to be treated is not higher than 20 ppm.

6. A method according to any one of the preceding claims, wherein the content of slaked lime in the said substantially saturated aqueous solution is from 1,550 to 1,650 ppm.

7. A method according to any one of the preceding claims which is operated continuously.

8. An apparatus for use in treating water to achieve a desired Langelier index of a water supply by addition of gaseous carbon dioxide and a substantially saturated slaked lime solution, which comprises means for adding carbon dioxide and saturated slaked lime solution, a means for detecting the pH of the water after one or both of these additives has been added and a means for controlling the rate of flow of the substantially saturated slaked lime solution into the water supply in accordance with the detected pH.

9. An apparatus according to claim 8 including a means for detecting the flow rate of the water to which the gaseous carbon dioxide has been added and a means for controlling the rate of flow of the gaseous carbon dioxide into the water in accordance with a signal provided thereto by said detecting means.

10. An apparatus according to claim 8 or 9 comprising a slaked lime dissolving vessel, a carbon dioxide gas dissolving vessel, and a slaked lime addition portion or addition vessel in which a substantially saturated aqueous solution of slaked lime from the slaked lime dissolving vessel is added to water containing free carbonic acid produced in the carbon dioxide gas dissolving vessel.

**Patentansprüche**

1. Verfahren zur Behandlung von Wasser, um einen gewünschten Langelier-Index in einem Wasserversorgungssystem zu erreichen, wobei man:
   (1) die Menge an Kohlendioxid, die erforderlich ist, um die Konzentration an freier Kohlensäure in dem Wasser zu erhöhen, ermittelt, und zwar auf der Grundlage der bestehenden und gewünschten Langelier-Indizes, und des zulässigen pH-Bereiches, des Wasserversorgungssystems;
   (2) die genannte Menge an Kohlendioxidgas in dem Wasser auflöst, um freie Kohlensäure in dem Wasser zu erzeugen; und
   (3) eine im wesentlichen gesättigte wässrige Lösung von gelöschtem Kalk dem Wasserversorgungssystem zufügt, so dass die freie Kohlensäure neutralisiert und der gewünschte Langelier-Index erreicht werden.

2. Verfahren gemäss Anspruch 1, wobei der pH des die freie Kohlensäure enthaltenden Wassers oder des Wassers nach Zugabe der Lösung des gelöschten Kalks gemessen und ein entsprechendes Signal erzeugt werden, wobei das genannte Signal auf ein Gerät gegeben wird, das die Durchflussgeschwindigkeit der im wesentlichen gesättigten wässrigen Lösung des gelöschten Kalks in das Wasserversorgungssystem steuert.

3. Verfahren gemäss Anspruch 1 oder 2, wobei die Durchflussgeschwindigkeit des die freie Kohlensäure enthaltenden Wassers, hergestellt in Stufe (2), gemessen und ein entsprechendes Signal erzeugt werden, wobei das genannte Signal auf einen Kohlendioxidgas-Durchflussgeschwindigkeitsregler gegeben wird.

4. Verfahren gemäss Anspruch 1, 2 oder 3, wobei der genannte gewünschte Langelier-Index -1 bis +1 beträgt.

5. Verfahren gemäss jedem der vorhergehenden Ansprüche, wobei der Ausgangsgehalt an freier Kohlensäure im zu behandelnden Wasser nicht höher als 20 ppm ist.

6. Verfahren gemäss jedem der vorhergehenden Ansprüche, wobei der Gehalt an gelöschtem Kalk in der genannten im wesentlichen gesättigten wässrigen Lösung 1550 bis 1650 ppm beträgt.

7

7. Verfahren gemäss jedem der vorhergehenden Ansprüche, welches kontinuierlich betrieben wird.

8. Vorrichtung zur Verwendung bei der Wasserbehandlung, um einen gewünschten Langelier-Index einer Wasserversorgung durch Zugabe von gasförmigem Kohlendioxid und einer im wesentlichen gesättigten Lösung von gelöschtem Kalk zu erreichen, welche Zugabeeinrichtungen für Kohlendioxid und eine gesättigte Lösung von gelöschtem Kalk, Messgeräte für den pH des Wassers, nachdem eines oder beide dieser Zugabemittel zugefügt worden sind, sowie eine Einrichtung zur Steuerung der Durchflussgeschwindigkeit der im wesentlichen gesättigten Lösung von gelöschtem Kalk in das Wasserversorgungssystem in Abstimmung mit dem gemessenen pH umfasst.

9. Vorrichtung gemäss Anspruch 8, enthaltend eine Einrichtung zur Messung der Durchflussgeschwindigkeit des Wassers, dem das gasförmige Kohlendioxid zugefügt worden ist, sowie eine Einrichtung zur Steuerung der Durchflussgeschwindigkeit des gasförmigen Kohlendioxids in das Wasser in Abstimmung mit einem Signal, das durch die genannte Messeinrichtung darauf gegeben wird.

10. Vorrichtung gemäss Anspruch 8 oder 9, enthaltend einen Auflösungsbehälter für gelöschten Kalk, einen Auflösungsbehälter für Kohlendioxidgas sowie einen Zugabeteil oder einen Zugabebehälter für gelöschten Kalk, worin eine im wesentlichen gesättigte wässrige Lösung von gelöschtem Kalk aus dem Auflösungsbehälter für den gelöschten Kalk zu Wasser gegeben wird, das freie Kohlensäure enthält, welches im Auflösungsbehälter für das Kohlendioxidgas hergestellt wird.

## Revendications

1. Méthode de traitement de l'eau pour atteindre un indice de Langelier désiré dans une alimentation en eau qui comprend :
   (1) la détermination de la quantité de dioxyde de carbone nécessaire pour augmenter la concentration d'acide carbonique libre de l'eau sur la base des indices de Langelier existants et désirés, et de la gamme de pH acceptable, de l'alimentation en eau ;
   (2) la dissolution de ladite quantité de gaz de dioxyde de carbone dans l'eau pour produire de l'acide carbonique libre dans l'eau ; et
   (3) l'addition d'une solution aqueuse de chaux éteinte sensiblement saturée dans l'alimentation en eau de façon que l'acide carbonique libre soit neutralisé et que l'indice désiré de Langelier soit atteint.

2. Méthode selon la revendication 1, dans laquelle le pH de l'eau contenant l'acide carbonique libre ou de l'eau après addition de la solution de chaux éteinte est déterminé et un signal correspondant est produit, ledit signal étant fourni à un dispositif de contrôle du débit de la solution aqueuse de chaux éteinte sensiblement saturée dans l'alimentation en eau.

3. Méthode selon la revendication 1 ou 2, dans laquelle le débit de l'eau contenant l'acide carbonique libre produit dans l'étape (2) est déterminé et un signal correspondant est produit, ledit signal étant fourni à un régulateur de débit de gaz de dioxyde de carbone.

4. Méthode selon la revendication 1, 2 ou 3, dans laquelle ledit indice désiré de Langelier est compris entre -1 et +1.

5. Méthode selon l'une quelconque des revendications précédentes dans laquelle la teneur de départ en acide carbonique libre dans l'alimentation d'eau devant être traitée n'est pas supérieure à 20 ppm.

6. Méthode selon l'une quelconque des revendications précédentes, dans laquelle la teneur en chaux éteinte de ladite solution aqueuse sensiblement saturée est comprise entre 1550 et 1650 ppm.

7. Méthode selon l'une quelconque des revendications précédentes qui se déroule en continu.

8. Appareil utilisé dans le traitement de l'eau pour atteindre un indice désiré de Langelier d'une alimentation en eau, par addition de dioxyde de carbone gazeux et d'une solution de chaux éteinte sensiblement saturée qui comprend des moyens d'addition de dioxyde de carbone et de solution de chaux éteinte saturée, un moyen de détermination du pH de l'eau après addition d'un ou de deux de ces additifs et un moyen de contrôle du débit de la solution de chaux éteinte sensiblement saturée, dans l'alimentation en eau, conformément au pH déterminé.

9. Appareil selon la revendication 8 comprenant un moyen de détection du débit de l'eau à laquelle a été ajouté le dioxyde de carbone gazeux et un moyen de contrôle du débit du dioxyde de carbone gazeux dans l'eau, conformément à un signal qui lui est fourni par ledit moyen de détection.

10. Appareil selon la revendication 8 ou 9 comprenant un récipient de dissolution de chaux éteinte, un récipient de dissolution de gaz de dioxyde de carbone, et un récipient d'addition ou d'addition partielle de chaux éteinte dans lequel une solution aqueuse de chaux éteinte sensiblement saturée provenant du récipient de dissolution de chaux éteinte est ajoutée à l'eau contenant de l'acide carbonique libre produit dans le récipient de dissolution de gaz de dioxyde de carbone.

# *Fig. 1*

### Effect of Addition of Calcium Hydroxide
(Concentration of free $CO_2$ is relatively low)

Addition of $Ca(OH)_2$ (ppm)

Hardness with Ca of original water = 20.2 mg/ℓ

# Fig. 2

Effect fo Addition of Calcium Hydroxide
(Concentration of free $CO_2$ is relatively high)

Addition of $Ca(OH)_2$ ( ppm )

Hardness with Ca of original water = 19.5 mg/l

# Fig. 3

# Fig. 4

# Fig. 5